# EUROPÄISCHE PATENTSCHRIFT

(11) **EP 4 259 338 B1**
(45) Veröffentlichungstag und Bekanntmachung des Hinweises auf die Patenterteilung: **26.03.2025**
(21) Anmeldenummer: 21839833.7
(22) Anmeldetag: 14.12.2021
(51) Int. Cl.: B05B 3/10, B05B 15/14, B05B 13/04, F16F 15/36

(54) **ABSPRÜHKÖRPER, INSBESONDERE GLOCKENTELLER, UND ZUGEHÖRIGES BETRIEBSVERFAHREN**
ATOMIZATION BODY, IN PARTICULAR BELL CUP, AND ASSOCIATED OPERATING METHOD
CORPS DE PULVÉRISATION, NOTAMMENT BOL, ET PROCÉDÉ D'EXPLOITATION ASSOCIÉ

(30) Priorität: 18.12.2020 DE 102020134121
(43) Veröffentlichungstag der Anmeldung: 18.10.2023
(73) Patentinhaber: Dürr Systems AG, 74321 Bietigheim-Bissingen (DE)
(72) Erfinder: SEIZ, Bernhard, 74348 Lauffen (DE); BAUMANN, Michael, 74223 Flein (DE); KRUMMA, Harry, 74357 Bönnigheim (DE); HERRE, Frank, 71739 Oberriexingen (DE); NOLTE, Hans-Jürgen, 74354 Besigheim (DE); HECKELER, Christoph, 71272 Renningen (DE); BUSCHBECK, Andreas, 64404 Bickenbach (DE)
(74) Vertreter: v. Bezold & Partner Patentanwälte - PartG mbB
(86) Internationale Anmeldenummer: PCT/EP2021/085576
(87) Internationale Veröffentlichungsnummer: WO 2022/128973

(56) Entgegenhaltungen:
- DE-A1- 10 320 973
- DE-A1- 102012 002 257
- DE-A1- 102013 013 650
- DE-A1- 102018 100 372
- DE-A1- 102018 127 555
- DE-C1- 3 508 970
- DE-C2- 2 640 111
- JP-A- H02 201 236
- JP-A- S5 514 368

## Beschreibung

Die Erfindung betrifft einen Glockenteller als Absprühkörper für einen Rotationszerstäuber zur Applikation eines Beschichtungsmittels auf ein Bauteil, insbesondere zur Applikation eines Lacks auf ein Kraftfahrzeugkarosseriebauteil. Weiterhin betrifft die Erfindung einen Rotationszerstäuber mit einem solchen Glockenteller, einen Lackierroboter mit einem solchen Rotationszerstäuber und eine Beschichtungsanlage mit einer dieser Komponenten (Glockenteller, Rotationszerstäuber, Beschichtungsroboter). Darüber hinaus betrifft die Erfindung auch ein entsprechendes Betriebsverfahren.

In modernen Lackieranlagen zur Lackierung von Kraftfahrzeugkarosseriebauteilen werden als Applikationsgeräte üblicherweise Rotationszerstäuber eingesetzt, die im Lackierbetrieb einen Glockenteller mit hoher Drehzahl drehen. Der zu applizierende Lack wird dem rotierenden Glockenteller über eine zentrale Farbdüse zugeführt und strömt dann an der Stirnseite des rotierenden Glockentellers über eine Überströmfläche zu einer ringförmig umlaufenden Absprühkante, wo der Lack abgesprüht wird. Aufgrund der hohen Drehzahlen des Glockentellers ist es wichtig, dass der Glockenteller möglichst keine Unwucht aufweist. Es ist deshalb aus dem Stand der Technik bekannt, die Glockenteller vor der Auslieferung auszuwuchten. Hierzu können Auswuchtbohrungen, Pressprofile oder Schleifmarken in den Glockenteller eingebracht werden, um den Glockenteller auszuwuchten. Diese bekannte Art des aktiven Auswuchtens von Glockentellern ist jedoch mit verschiedenen Nachteilen verbunden.

Zum einen ist die Herstellung von Glockentellern mit einer sehr geringen Restunwucht teuer, da eine präzise Fertigung erforderlich ist und das aktive Auswuchten aufwändig ist.

Zum anderen ist ein Auswuchten der Glockenteller im Betrieb nicht möglich. Dies ist problematisch, weil Glockenteller im Lackierbetrieb eine Unwucht erwerben, beispielsweise durch eine Beschädigung oder durch Verschmutzungen mit dem applizierten Lack. Diese im Lackierbetrieb erworbenen Unwuchten können bisher nicht beseitigt werden, so dass in der Regel ein Austausch des Glockentellers erforderlich ist, wenn die Unwucht ein zulässiges Maß übersteigt.

Dies ist auch problematisch, weil die im normalen Lackierbetrieb erworbene Unwucht des Glockentellers zu unerwünschten Betriebsschwingungen und zu einer hohen Betriebsbelastung bis hin zum Ausfall des Rotationszerstäubers führen kann. Eine solche mechanische Belastung des Rotationszerstäubers im Lackierbetrieb aufgrund einer erworbenen Unwucht wird oft erst erkannt, wenn es bereits zum Ausfall des Rotationszerstäubers gekommen ist, beispielsweise aufgrund eines Blockierens der Turbine, die den Rotationszerstäuber antreibt. Bei einer solchen Turbinenblockade kann es zu Folgefehlern kommen, wie beispielsweise Anschleifen, im Extremfall mit einer Funkenbildung, oder Ablösen des Glockentellers von dem Rotationszerstäuber mit Brandgefahr und Explosionsgefahr.

Zum technischen Hintergrund der Erfindung ist auch hinzuweisen auf DE 10 2010 013 551 B4, DE 10 2018 127 555 A1, JP H02-201 236 A, DE 10 2018 100 372 A1, DE 26 40 111 C2, DE 103 20 973 C2 JP S55-14368 A, DE 10 2012 002 257 A1 und DE 10 2013 013 650 A1.

Schließlich offenbart DE 35 08 970 C1 das Prinzip des selbständigen passiven Auswuchtens bei einem Rotationszerstäuber. Hierbei ist die zum selbständigen passiven Auswuchtens erforderliche Ausgleichsmasse nicht in dem Glockenteller angeordnet, sondern in einem separaten Ringkörper, was sich als nicht praktikabel erwiesen hat.

Der Erfindung liegt deshalb die Aufgabe zugrunde, das Problem der Unwucht in den bekannten Glockentellern zu lösen.

Diese Aufgabe wird durch einen erfindungsgemäßen Glockenteller gemäß dem Hauptanspruch als Absprühkörper für einen Rotationszerstäuber bzw. durch eine entsprechendes Betriebsverfahren gemäß dem unabhängigen Verfahrensanspruch gelöst.

Weiterhin ist zu erwähnen, dass die Erfindung hinsichtlich des Typs des zu applizierenden Beschichtungsmittels nicht auf Lacke beschränkt ist. Vielmehr kann das erfindungsgemäße Prinzip auch bei Rotationszerstäubern eingesetzt werden, die andere Typen von Beschichtungsmitteln applizieren.

Ferner ist auch zu erwähnen, dass die Erfindung hinsichtlich der beschichteten Bauteile nicht auf Kraftfahrzeugkarosseriebauteile beschränkt ist. Vielmehr kann das erfindungsgemäße Prinzip auch bei der Beschichtung anderer Typen von Bauteilen eingesetzt werden.

Die Erfindung beruht auf der allgemeinen technischen Erkenntnis, dass das Auswuchten von im Betrieb rotierenden Glockentellern nicht nur - wie eingangs beschrieben - aktiv möglich ist, indem beispielsweise Auswuchtbohrungen in den Glockenteller eingebracht werden. Vielmehr umfasst die Erfindung die allgemeine technische Erkenntnis, dass im Betrieb rotierende Glockenteller auch selbsttätig passiv ausgewuchtet werden können, wie es an sich aus dem Stand der Technik bekannt ist. Hierzu ist erforderlich, in dem Glockenteller eine Ausgleichsmasse vorzusehen, die sich in dem Glockenteller in Umfangsrichtung frei bewegen kann. Wenn nun der Glockenteller auf eine überkritische Drehzahl beschleunigt wird, so bewegt sich die Ausgleichsmasse selbsttätig so, dass der Glockenteller ausgewuchtet ist. Die kritische Drehzahl in diesem Sinne ist hierbei diejenige Drehzahl des Lagersystems, in dem Resonanzeffekte auftreten.

Der im Rahmen der Erfindung verwendete Begriffs des Auswuchtens verlangt nicht, dass der Glockenteller nach dem Auswuchten perfekt ausgewuchtet ist und keinerlei Unwucht mehr aufweist. Vielmehr umfasst dieser Begriff im Rahmen der Erfindung auch eine Reduzierung der Unwucht des Glockentellers, so dass der Glockenteller auch nach dem Auswuchten noch eine geringe verbleibende Unwucht aufweist.

Die vorstehend erwähnte Technik des selbständigen passiven Auswuchtens von rotierenden Körpern ist an sich aus dem Stand der Technik bekannt, wie vorstehend bereits kurz erwähnt wurde. Beispielsweise ist hier zu auf folgende Veröffentlichungen hinzuweisen:
- Makram, M. et al.: "Effect of Automatic ball balancer on unbalanced rotor vibration", 17th International Conference on AEROSPACE SCIENCES & AVIATION TECHNOLOGY, April 11 - 13, 2017.
- Kim, T., Na, S.: "New automatic ball balancer design to reduce transient-response in rotor system", Mechanical Systems and Signal Processing, 2013, Vol. 37, Seiten 265-275.
- Green K, Champneys A.R, Friswell M.I and Muñoz A.M, 2008, "Investigation of a multi-ball, automatic dynamic balancing mechanism for eccentric rotors", Phil. Trans. R. Soc. A.366705-728.
- Adolfsson, J.: "Passive Control of Mechanical Systems Bipedal Walking and Autobalancing", ISSN 0348-467X.
- B. Hredzak and Guoxiao Guo, "Adjustable balancer with electromagnetic release of balancing members," in IEEE Transactions on Magnetics, vol. 42, no. 5, pp. 1591-1596, May 2006, doi: 10. 1109/TMAG. 2005.863619.
- Hwang, C., Chung, J.: "Dynamic analysis of an automatic ball balancer with two races", JSME International Journal, 1999, Series C, Vol. 42, No. 2. Seite 265-272.
- US 8 286 453 B2.

Bisher wurde die Technik des selbsttätigen passiven Auswuchtens mit einer beweglichen Ausgleichsmasse jedoch noch nicht zum Auswuchten von Glockentellern (z.B. Glockenteller) von Rotationszerstäubern eingesetzt, da in der Fachwelt das Vorurteil bestand, dass die spezifischen Gegebenheiten (z.B. Drehzahl, Drehmoment, etc.) von Rotationszerstäubern das selbsttätige passive Auswuchten nicht zulassen.

Der erfindungsgemäße Glockenteller weist mindestens eine Ausgleichsmasse zum selbsttätigen passiven Auswuchten des Glockentellers auf, wobei die Ausgleichsmasse nicht in einem separaten Ringkörper, sondern in dem Glockenteller beweglich angeordnet ist.

Darüber hinaus weist die erfindungsgemäße Glockenteller vorzugsweise mindestens einen ringförmig umlaufenden Aufnahmeraum in dem Glockenteller auf, um die Ausgleichsmasse darin beweglich aufzunehmen. Beispielsweise kann dieser Aufnahmeraum als Ringnut oder als ringförmig umlaufende Hohlraum ausgebildet sein. Hierbei ist zu erwähnen, dass die Ausgleichsmasse als UV-härtbares Harz ausgebildet sein kann, wie noch detailliert beschrieben wird. In diesem Fall ist es sinnvoll, wenn der Aufnahmeraum für das als Ausgleichsmasse dienende UV-härtbare Harz von außen einsehbar ist, damit das UV-härtbare Harz durch eine UV-Bestrahlung von außen gehärtet werden kann.

Weiterhin besteht im Rahmen der Erfindung die Möglichkeit, dass der Glockenteller mehrere Aufnahmeräume für entsprechend viele Ausgleichsmassen aufweist. Die einzelnen Aufnahmeräume können hierbei jeweils als Ringnut oder als ringförmig umlaufender Hohlraum ausgebildet sein, wie vorstehend bereits kurz beschrieben wurde.

Hierbei ist zu erwähnen, dass die einzelnen Aufnahmeräume optional voneinander getrennt oder miteinander verbunden sein können.

Ferner ist zu erwähnen, dass die Aufnahmeräume axial und/oder radial zueinander versetzt angeordnet sein können.

Im Rahmen des selbsttätigen passiven Auswuchtens des Glockentellers kann sich die Ausgleichsmasse in dem Glockenteller frei bewegen. Der Aufnahmeraum in dem Glockenteller ist hierbei vorzugsweise so ausgebildet, dass sich die Ausgleichsmasse entlang einer vorgegebenen Bahn bewegen kann, wobei die Bahn beispielsweise in Umfangsrichtung (tangential), radial und/oder axial verlaufen kann. Ein axialer Verlauf der Bahn für die Bewegung der Ausgleichsmasse bedeutet hierbei, dass die Bahn parallel zu der Rotationsachse des Glockentellers verläuft. Ein radialer Verlauf der Bahn für die Bewegung der Ausgleichsmasse bedeutet dagegen, dass die Bahn bezüglich der Rotationsachse des Glockentellers radial verläuft. Ein tangentialer Verlauf der Bahn für die Bewegung der Ausgleichsmasse bedeutet schließlich, dass die Bahn bezüglich der Rotationsachse des Glockentellers in Umfangsrichtung verläuft. Die Bahn für die Bewegung der Ausgleichsmasse kann auch mehrere Bahnabschnitte aufweisen, die verschieden ausgerichtet sind, beispielsweise je nach Bahnabschnitt radial, axial oder tangential.

Hinsichtlich der Ausgleichsmasse selbst bestehen im Rahmen der Erfindung verschiedene Möglichkeiten.

Beispielsweise kann es sich bei der Ausgleichsmasse um ein Fluid handeln, wie beispielsweise eine Flüssigkeit (z.B. Wasser oder Öl).

Es besteht jedoch auch die Möglichkeit, dass es sich bei dem Fluid um ein Harz handelt, wie beispielsweise das vorstehend bereits kurz beschriebene UV-härtbare Harz. Die Bestrahlung des UV-härtbaren Harzes mit UV-Licht ermöglicht dann eine Fixierung des UV-härtbaren Harzes im ausgewuchtet Zustand des Glockentellers.

Alternativ kann es sich bei der Ausgleichsmasse um ein Pulver oder um ein Granulat aus zahlreichen festen Partikeln (z.B. Kugeln) handeln.

In einer anderen Alternative ist die Ausgleichsmasse eine Mischung aus festen Partikeln (z.B. Kugeln) in einem Fluid (z.B. Öl oder Wasser). Hierbei ist es sinnvoll, wenn die Kombination der festen Partikel mit dem Fluid so abgestimmt ist, dass sich die Partikel erst in dem überkritischen Drehzahlbereich in dem Fluid bewegen können.

Ferner besteht im Rahmen der Erfindung auch die Möglichkeit, dass die Ausgleichsmasse ein Wachs ist.

Es wurde bereits vorstehend kurz erwähnt, dass sich die Ausgleichsmasse im Rahmen des selbsttätigen passiven Auswuchtens in dem Glockenteller frei bewegt. Im überkritischen Drehzahlbereich während des selbsttätigen passiven Auswuchtens ist also eine freie Beweglichkeit der Ausgleichsmasse in dem Glockenteller erwünscht. In dem überkritischen Drehzahlbereich zeigen Unwucht und Auslenkung der Ausgleichsmasse nämlich eine entgegengesetzte Phasenlage. Dies hat zur Folge, dass sich die Ausgleichsmasse entgegen der Winkellage der Unwucht ausrichtet (d.h. gegenphasig) und somit einen selbsttätigen Unwuchtausgleich bewirkt. Bei einem Betrieb des Glockentellers im unterkritischen Drehzahlbereich zeigen Unwucht und Auslenkung der Ausgleichsmasse dagegen die gleiche Phasenlage. Dies hat zur Folge, dass sich die Ausgleichsmasse in der Winkellage der Unwucht (d.h. gleichphasig) anordnet und die vorhandene Unwucht noch verstärkt. Im überkritischen Drehzahlbereich ist also eine freie Beweglichkeit der Ausgleichsmasse erwünscht, während die Beweglichkeit der Ausgleichsmasse im unterkritischen Drehzahlbereich stört.

In einer Erfindungsvariante ist deshalb vorgesehen, dass das Fluid der Ausgleichsmasse eine Viskosität aufweist, die abhängig ist von mindestens einer der folgenden Einflussgrößen:
- Temperatur des Fluids der Ausgleichsmasse,
- Magnetfeld das auf das Fluid einwirkt,
- elektrisches Feld, das auf das Fluid einwirkt, und/oder
- mechanische Belastung des Fluids, insbesondere durch die Schergeschwindigkeit des Fluids. Dies ermöglicht es, die Beweglichkeit des als Ausgleichsmasse dienenden Fluids in dem Glockenteller gezielt zu beeinflussen, indem die vorstehend genannten Einflussgrößen geändert werden.

Beispielsweise kann es sich bei dem als Ausgleichsmasse dienenden Fluid deshalb um ein nicht-Newtonsches Fluid handeln, wie beispielsweise ein Casson-Fluid, ein Bingham-Fluid oder ein Boger-Fluid, um nur einige Beispiele zu nennen.

Allgemein ist auch zu erwähnen, dass die Ausgleichsmasse hinreichend groß sein sollte, um bei der räumlichen Lage der Ausgleichsmasse innerhalb des Glockentellers das selbsttätige passive Auswuchten des Glockentellers zu ermöglichen.

Der erfindungsgemäße Glockenteller (z.B. Glockenteller) ist in Übereinstimmung mit dem Stand der Technik konstruktiv für einen bestimmten Betriebsdrehzahlbereich ausgelegt, wobei der Glockenteller bei der Applikation des Beschichtungsmittels im Beschichtungsbetrieb dann mit einer Betriebsdrehzahl innerhalb des Betriebsdrehzahlbereichs rotiert. Darüber hinaus ist zu erwähnen, dass das Lagersystem eine konstruktiv bedingte kritische Drehzahl aufweist, bei welcher das Lagersystem Resonanzeffekte zeigt. Das Lagersystem weist deshalb konstruktiv bedingt einen unterkritischen Drehzahlbereich mit Drehzahlen unterhalb der kritischen Drehzahl und einen überkritischen Bereich mit Drehzahlen oberhalb der kritischen Drehzahl auf.

In einer Erfindungsvariante liegt die kritische Drehzahl unterhalb des Betriebsdrehzahlbereichs, so dass der eigentliche Beschichtungsbetrieb im überkritischen Drehzahlbereich erfolgt. In dieser Erfindungsvariante erfolgt das selbsttätige passive Auswuchten also auch in dem normalen Beschichtungsbetrieb.

In einer anderen Erfindungsvariante liegt die kritische Drehzahl dagegen über dem Betriebsdrehzahlbereich des Glockentellers, so dass der Beschichtungsbetrieb im unterkritischen Drehzahlbereich erfolgt. Dies hat zur Folge, dass in dem normalen Beschichtungsbetrieb kein selbsttätiges passives Auswuchten erfolgt. Zum selbsttätigen passiven Auswuchten des Glockentellers muss der Glockenteller dann aus dem unterkritischen Drehzahlbereich in den überkritischen Drehzahlbereich beschleunigt werden.

Bei einem Betrieb des Glockentellers im unterkritischen Drehzahlbereich ist es sinnvoll, wenn die Ausgleichsmasse nicht beweglich ist, da die Ausgleichsmasse dann eine bestehende Unwucht verstärken würde, wie vorstehend bereits kurz erwähnt wurde. Es ist deshalb sinnvoll, wenn die Ausgleichsmasse im unterkritischen Drehzahlbereich fixiert werden kann, um dieses unerwünschte Verstärken der bestehenden Unwucht zu verhindern. Der Glockenteller kann deshalb einen Fixierungsmechanismus aufweisen, der die Ausgleichsmasse teilweise oder vollständig in dem Glockenteller fixieren kann. Dies ist insbesondere dann sinnvoll, wenn der Glockenteller beim Hochfahren den unterkritischen Drehzahlbereich durchfährt, um in den überkritischen Drehzahlbereich zu gelangen. Weiterhin ist das Fixieren der Ausgleichsmasse auch sinnvoll nach dem selbsttätigen passiven Auswuchten in dem überkritischen Drehzahlbereich, damit die Ausgleichsmasse dann beim anschließenden Beschichtungsbetrieb in dem unterkritischen Drehzahlbereich ihre ausgewuchtet the Position beibehält.

Dieser Fixierungsmechanismus kann beispielsweise in den Glockenteller integriert sein. Es besteht jedoch auch die Möglichkeit, dass der Fixierungsmechanismus von dem Glockenteller getrennt und in dem Rotationszerstäuber angeordnet ist. Schließlich besteht auch die Möglichkeit, dass der Fixierungsmechanismus gänzlich getrennt ist von dem Glockenteller und auch von dem Rotationszerstäuber.

Der Fixierungsmechanismus ist vorzugsweise so ausgebildet, dass die Ausgleichsmasse oberhalb der kritischen Drehzahl freigegeben wird, so dass sich die Ausgleichsmasse dann in dem Glockenteller bewegen kann, um das selbsttätige passive Auswuchten des Glockentellers zu ermöglichen.

Weiterhin ist der Fixierungsmechanismus vorzugsweise so ausgebildet, dass die Ausgleichsmasse unterhalb der kritischen Drehzahl fixiert wird, so dass sich die Ausgleichsmasse dann in dem Glockenteller nicht oder nur vermindert bewegen kann, um eine Verstärkung der Resonanzen durch die Ausgleichsmasse zu verhindern.

Beispielsweise kann der Fixierungsmechanismus ein Feder-Masse-System aufweisen. Es besteht jedoch auch die Möglichkeit, dass der Fixierungsmechanismus einen Elektromagneten aufweist, der in dem Glockenteller oder in dem Rotationszerstäuber angeordnet ist und die Ausgleichsmasse im aktivierten Zustand fixiert.

Weiterhin besteht im Rahmen der Erfindung die Möglichkeit, dass die Ausgleichsmasse aus einem Fluid besteht, dass magnet-rheologisch oder elektro-rheologisch ist. Dies bedeutet, dass die Viskosität des Fluids von einem Magnetfeld bzw. einem elektrischen Feld abhängt, das auf das Fluid einwirkt. Auch dadurch lässt sich die Beweglichkeit der Ausgleichsmasse in dem Glockenteller in der vorstehend beschriebenen Weise beeinflussen.

Ferner ist zu erwähnen, dass die Erfindung nicht nur Schutz beansprucht für den vorstehend beschriebenen Glockenteller als einzelnes Bauteil bzw. als Ersatzteil. Vielmehr beansprucht die Erfindung auch Schutz für einen kompletten Rotationszerstäuber mit einem solchen Glockenteller. Weiterhin beansprucht die Erfindung auch Schutz für einen Beschichtungsroboter mit einem solchen Rotationszerstäuber und für eine komplette Beschichtungsanlage mit einer der vorstehend beschriebenen Komponenten (Glockenteller, Rotationszerstäuber, Beschichtungsroboter).

Schließlich umfasst die Erfindung auch ein entsprechendes Betriebsverfahren für einen erfindungsgemäßen Glockenteller. Im Rahmen des erfindungsgemäßen Betriebsverfahrens ist vorgesehen, dass der Glockenteller mit einer Drehzahl in dem überkritischen Drehzahlbereich betrieben wird, so dass die bewegliche Ausgleichsmasse in dem Glockenteller zu einem selbsttätigen passiven Auswuchten des Glockentellers führt.

In einer Erfindungsvariante erfolgt das selbsttätige passive Auswuchten des Glockentellers auf dem Rotationszerstäuber, d.h. während der Glockenteller auf dem Rotationszerstäuber montiert ist.

In einer anderen Erfindungsvariante erfolgt das selbsttätige passive Auswuchten des Glockentellers dagegen auf einer Auswuchtmaschine, d.h. während der Glockenteller von dem Rotationszerstäuber getrennt ist.

Der Beschichtungsbetrieb erfolgt hierbei vorzugsweise im unterkritischen Drehzahlbereich, so dass der Glockenteller zum selbsttätigen passiven Auswuchten in den überkritischen Drehzahlbereich beschleunigt werden muss.

Es ist jedoch alternativ auch möglich, dass der Beschichtungsbetrieb im überkritischen Drehzahlbereich erfolgt, so dass das selbsttätige passive Auswuchten während des Beschichtungsbetriebs erfolgt.

Beim Durchfahren des unterkritischen Drehzahlbereichs beim Beschleunigen in den überkritischen Drehzahlbereich wird die Ausgleichsmasse vorzugsweise während des Durchfahrens des unterkritischen Drehzahlbereichs fixiert. Nach dem Erreichen des überkritischen Drehzahlbereichs wird die Ausgleichsmasse dann vorzugsweise in dem Glockenteller freigegeben, damit der Glockenteller selbsttätig passiv auswuchten kann. Anschließend wird die Ausgleichsmasse dann wieder vorzugsweise fixiert und der Glockenteller wird wieder in den unterkritischen Drehzahlbereich abgebremst, wo dann der eigentliche Beschichtungsbetrieb erfolgt.

Das erfindungsgemäße Betriebsverfahren sieht deshalb vorzugsweise auch das Fixieren der Ausgleichsmasse in dem Glockenteller vor, insbesondere beim Durchfahren des unterkritischen Drehzahlbereichs hinein in den überkritischen Drehzahlbereich oder nach dem selbsttätigen passiven Auswuchten des Glockentellers. Das Fixieren der Ausgleichsmasse kann beispielsweise durch eine UV-Bestrahlung der UV-härtbaren Ausgleichsmasse erfolgen, durch eine Erwärmung der Ausgleichsmasse oder durch eine Beaufschlagung der Ausgleichsmasse mit einem Magnetfeld oder mit einem elektrischen Feld, wie vorstehend bereits kurz beschrieben wurde.

Weiterhin sieht das erfindungsgemäße Betriebsverfahren vorzugsweise vor, dass regelmäßig ein selbsttätiges passives Auswuchten erfolgt, beispielsweise jeweils nach Ablauf einer vorgegebenen Zeitdauer (z.B. einmal täglich) nach Ablauf einer vorgegebenen Beschichtungsdauer oder nach einer vorgegebenen Anzahl von Umdrehungen des Glockentellers. Allgemein kann das selbsttätige passive Auswuchten immer dann erfolgen, wenn eine entsprechende Bedarfsmeldung einer Überwachungseinrichtung eingeht.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
Figur 1 zeigt eine Querschnittsansicht durch einen erfindungsgemäßen Glockenteller mit Ausgleichsmassen zum selbsttätigen passiven Auswuchten.
Figur 2 zeigt eine schematische Darstellung einer erfindungsgemäßen Lackieranlage.
Figur 3 zeigt ein Flussdiagramm zur Verdeutlichung des erfindungsgemäßen Betriebsverfahrens.
Figur 4 zeigt ein Diagramm zur Verdeutlichung des selbsttätigen passiven Auswuchtens zu Beginn eines Beschichtungsvorgangs.
Figur 5 zeigt eine Abwandlung von Figur 4 mit einem Lackierbetrieb im überkritischen Drehzahlbereich.

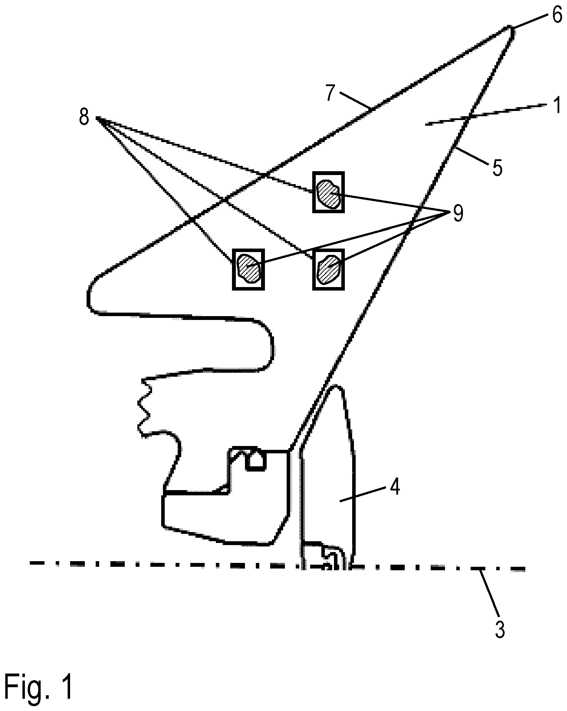

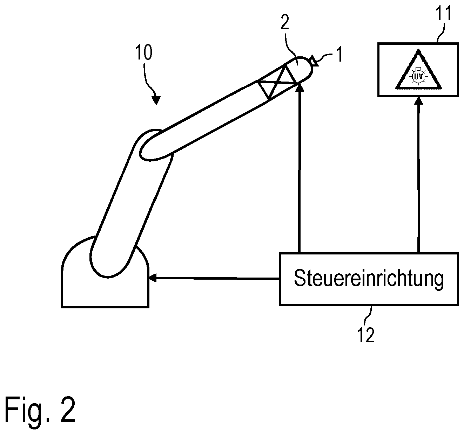

Im Folgenden wird nun das in Figur 1 dargestellte Ausführungsbeispiel eines erfindungsgemäßen Glockentellers 1 beschrieben, der an einem Rotationszerstäuber 2 montiert werden kann, wie er in Figur 2 schematisch dargestellt ist. Der Glockenteller 1 ist weitgehend herkömmlich aufgebaut und wird deshalb nachfolgend nur kurz beschrieben. So rotiert der Glockenteller 1 im Betrieb um eine Rotationsachse 3 und kann auf eine Turbinenwelle (nicht dargestellt) des Rotationszerstäubers 2 aufgeschraubt werden. Die Befestigung des Glockentellers 1 an der Turbinenwelle kann jedoch auch anders erfolgen, was an sich aus dem Stand der Technik bekannt ist. Der zu applizierende Lack wird hierbei mittig durch eine Farbdüse zugeführt und trifft dann in axialer Richtung zunächst auf die Rückseite einer Verteilerscheibe 4, die einen Großteil des Lacks radial nach außen auf eine Überströmfläche 5 des Glockentellers 1 umgelenkt. Der Lack strömt dann entlang der Überströmfläche 5 nach außen zu einer ringförmig umlaufenden Absprühkante 6, wo der Lack abgesprüht wird. Darüber hinaus weist der Glockenteller 1 noch eine äußere Mantelfläche 7 auf, die durch Außenspülungskanäle gespült und damit gereinigt werden kann, was er jedoch nicht erfindungswesentlich ist.

Der erfindungsgemäße Glockenteller 1 zeichnet sich nun durch mehrere ringförmig umlaufende Aufnahmeräume 8 auf, in denen jeweils eine Ausgleichsmasse 9 angeordnet ist. Die Aufnahmeräume 8 sind hierbei in radialer Richtung bzw. in axialer Richtung versetzt zueinander angeordnet. Darüber hinaus ist zu erwähnen, dass die Aufnahmeräume 8 ringförmig umlaufend angeordnet sind, so dass sich die Ausgleichsmasse 9 in den Aufnahmeräumen 8 in Umfangsrichtung frei bewegen können.

Alternativ besteht auch die Möglichkeit, dass nur ein einziger Aufnahmeraum 8 mit nur einer einzigen Ausgleichsmasse 9 vorhanden ist. Ferner besteht auch die Möglichkeit, dass die Aufnahmeräume 8 als Ringnuten ausgebildet sind, die von außen zugänglich sind, was eine Härtung der Ausgleichsmasse durch eine UV-Bestrahlung ermöglicht.

Bei einer Beschleunigung des Glockentellers 1 in einen überkritischen Drehzahlbereich führt die freie Beweglichkeit der Ausgleichsmassen 9 in den Aufnahmeräumen 8 dann zu dem gewünschten selbsttätigen passiven Auswuchten des Glockenkörpers. Dies bedeutet, dass sich die Ausgleichsmassen 8 gegenphasig zu den bestehenden Unwuchten anordnen und diese dadurch kompensieren.

Figur 2 zeigt eine stark vereinfachte schematische Darstellung einer erfindungsgemäßen Lackieranlage mit dem Glockenteller 1 und dem Rotationszerstäuber 2, der von einem mehrachsigen Lackierroboter 10 geführt wird. Hierbei ist zu erwähnen, dass die Ausgleichsmassen 9 in den Aufnahmeräumen 8 hierbei abweichend von der Darstellung in Fig. 1 so angeordnet sind, dass die Ausgleichsmassen 9 von außen einsehbar sind, beispielsweise in einer Ringnut. Weiterhin ist zu erwähnen, dass es sich bei den Ausgleichsmassen 9 hierbei um ein UV-härtbares Harz handelt, das durch Bestrahlung mit einem UV-Bestrahlungsgerät 11 ausgehärtet werden kann.

Darüber hinaus zeigt die Zeichnung eine Steuereinrichtung 12, die den Betrieb der Lackieranlage steuert.

Zum passiven selbsttätigen Auswuchten steuert die Steuereinheit 12 den Rotationszerstäuber 2 zunächst so an, dass der Glockenteller 1 in einen überkritischen Drehzahlbereich beschleunigt wird. Dabei führte die Beweglichkeit der Ausgleichsmassen 9 dann zu dem gewünschten selbsttätigen passiven Auswuchten. Anschließend wird der Glockenteller 1 dann von der UV-Bestrahlungseinrichtung 11 mit UV-Licht bestrahlt, um das als Ausgleichsmasse dienende UV-härtbare Harz auszuhärten, damit die Ausgleichsmasse 9 dann auch später in dem ausgewuchteten Zustand verbleibt.

Anschließend kann die Steuereinrichtung 12 dann den Rotationszerstäuber 2 wieder in den unterkritischen Drehzahlbereich abbremsen, in dem der eigentliche Lackierbetrieb erfolgt.

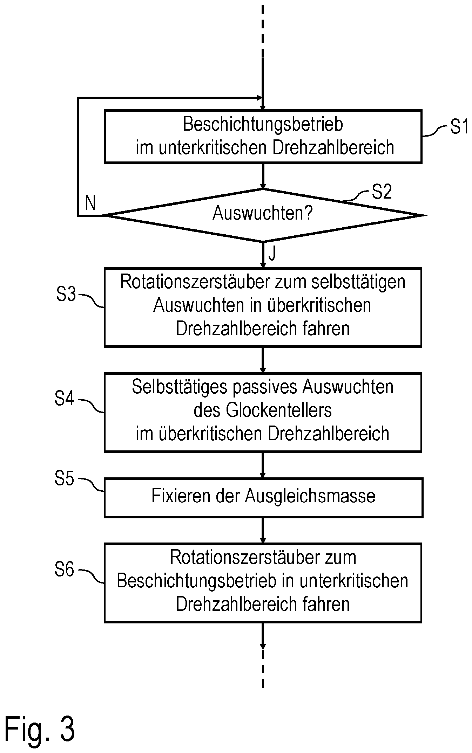

Figur 3 zeigt ein Flussdiagramm zur Verdeutlichung des erfindungsgemäßen Betriebsverfahrens.

In einem Schritt S1 erfolgt ein Beschichtungsbetrieb im unterkritischen Drehzahlbereich, wie es an sich aus dem Stand der Technik bekannt ist.

In einem Schritt S2 wird dann laufend geprüft, ob eine Auswuchtung erforderlich ist. Beispielsweise kann das zeitabhängig einmal täglich der Fall sein.

Falls dies nicht der Fall ist, so wird der Beschichtungsbetrieb in dem unterkritischen Drehzahlbereich in Schritt S1 fortgesetzt.

Falls dagegen ein Auswuchten erforderlich ist, so wird zu dem Schritt S3 übergegangen, in dem der Rotationszerstäuber in den überkritischen Drehzahlbereich beschleunigt wird.

In dem überkritischen Drehzahlbereich erfolgt dann in dem Schritt S4 das gewünschte selbsttätige passive Auswuchten des Glockentellers.

Anschließend wird die Ausgleichsmasse dann in einem Schritt S5 fixiert.

Nach dem Fixieren der Ausgleichsmasse kann dann der eigentliche Beschichtungsbetrieb wieder in dem unterkritischen Drehzahlbereich gemäß Schritt S6 erfolgen.

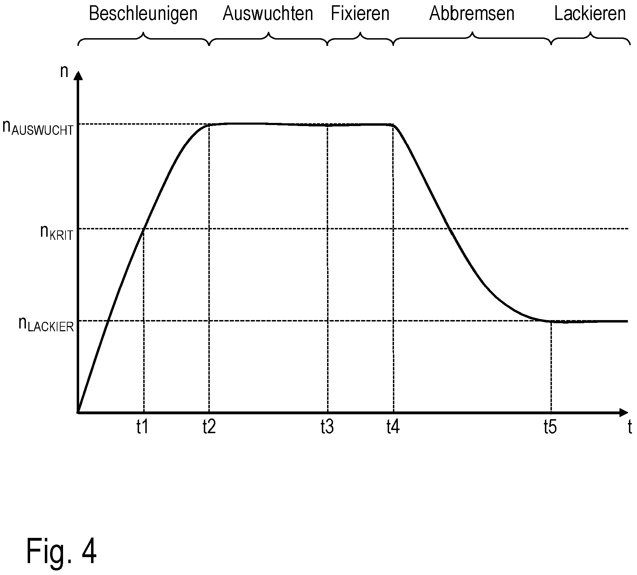

Figur 4 zeigt ein Diagramm zur Verdeutlichung der verschiedenen Betriebsphasen beim Starten des Rotationszerstäubers.

Hierbei ist vorab zu bemerken, dass dieses Diagramm keine maßstäbliche Darstellung zeigt, sondern die verschiedenen Betriebsphasen lediglich relativ zueinander qualitativ abgrenzen soll.

Vom Zeitpunkt t=0 bis t=t2 wird der Rotationszerstäuber auf eine Drehzahl n_{AUSWUCHT} beschleunigt, die oberhalb der kritischen Drehzahl n_{KRIT} liegt und das selbsttätige passive Auswuchten des Glockentellers ermöglichen soll.

In der Betriebsphase von t=t2 bis t=t3 erfolgt dann das selbsttätige passive Auswuchten des Glockentellers.

In der nächsten Betriebsphase von t=t3 bis t=t4 wird die Ausgleichsmasse dann in dem ausgewuchteten Zustand fixiert, beispielsweise durch UV-Bestrahlung der UV-härtbaren Ausgleichsmasse.

Anschließend wird der Rotationszerstäuber in der Betriebsphase von t=t4 bis t=t5 wieder auf eine unterkritische Drehzahl n_{LACKIER} abgebremst und in der Betriebsphase ab t=t5 dann der normale Lackierbetrieb bei der unterkritischen Drehzahl n_{LACKIER}.

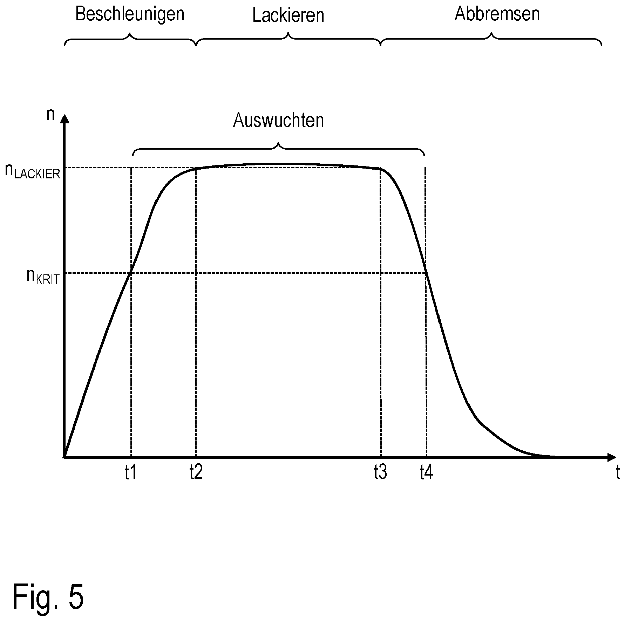

Figur 5 zeigt eine Abwandlung von Figur 4.

Hierbei erfolgt der Lackierbetrieb im überkritischen Drehzahlbereich zwischen t=t2 und t=t3. Dies bedeutet, dass das selbsttätige passive Auswuchten des Glockentellers im überkritischen Drehzahlbereich von t=t1 bis t=t4 auch den Lackierbetrieb umfasst.

### Bezugszeichenliste

- 1: Glockenteller
- 2: Rotationszerstäuber
- 3: Rotationsachse des Glockentellers
- 4: Verteilerscheibe
- 5: Überströmfläche des Glockentellers
- 6: Absprühkante des Glockentellers
- 7: Äußere Mantelfläche des Glockentellers
- 8: Aufnahmeräume für die Ausgleichsmassen
- 9: Ausgleichsmassen
- 10: Lackierroboter
- 11: UV-Bestrahlungsgerät zum Aushärten der Ausgleichsmasse
- 12: Steuereinrichtung
- n: Drehzahl des Rotationszerstäubers
- t: Zeit beim Hochfahren des Rotationszerstäubers
- n_{AUSWUCHT}: Überkritische Drehzahl zum passiven selbsttätigen Auswuchten
- n_{KRIT}: Kritische Drehzahl des Glockentellers
- n_{LACKIER}: Betriebsdrehzahl des Rotationszerstäubers beim Lackieren

## Patentansprüche

1. Glockenteller (1) als Absprühkörper für einen Rotationszerstäuber (2) zur Applikation eines Beschichtungsmittels auf ein Bauteil, insbesondere zur Applikation eines Lacks auf ein Kraftfahrzeugkarosseriebauteil, **gekennzeichnet durch** mindestens eine Ausgleichsmasse (9) zum selbsttätigen passiven Auswuchten des Glockentellers (1), wobei die Ausgleichsmasse (9) nicht in einem separaten Ringkörper, sondern in dem Glockenteller (1) beweglich angeordnet ist, um das selbsttätige passive Auswuchten des Glockentellers (1) in einem überkritischen Drehzahlbereich zu ermöglichen.

2. Glockenteller (1) nach Anspruch 1, **gekennzeichnet durch** mindestens einen ringförmig umlaufenden Aufnahmeraum (8) in dem Glockenteller (1) zur Aufnahme der Ausgleichsmasse (9), insbesondere als Ringnut oder als ringförmig umlaufender Hohlraum.

3. Glockenteller (1) nach Anspruch 2, **dadurch gekennzeichnet,**
a) **dass** der Glockenteller (1) mehrere Aufnahmeräume (8) für die Ausgleichsmassen (9) aufweist,
b) **dass** die Aufnahmeräume (8) optional voneinander getrennt oder miteinander verbunden sind,
c) **dass** die Aufnahmeräume (8) optional axial zueinander versetzt sind,
d) **dass** die Aufnahmeräume (8) optional radial zueinander versetzt sind.

4. Glockenteller (1) nach einem der vorhergehenden Ansprüche,
**dadurch gekennzeichnet,**
a) **dass** sich die Ausgleichsmasse (9) in dem Glockenteller (1) entlang einer vorgegebenen Bahn bewegen kann, insbesondere
a1) in Umfangsrichtung,
a2) radial und/oder
a3) axial, und/oder
b) **dass** die Ausgleichsmasse (9) wie folgt ausgebildet ist:
b1) als Fluid, insbesondere
b11) als Flüssigkeit, optional als Wasser oder Öl, oder
b12) als Harz, insbesondere als UV-härtbares Harz zur Fixierung des Harzes in dem Glockenteller (1) durch eine UV-Bestrahlung,
b2) als Pulver,
b3) als Granulat aus zahlreichen festen Partikeln, insbesondere Kugeln, oder
b4) als Mischung aus festen Partikeln in einem Fluid, insbesondere in Form von Kugeln in einem Öl, wobei die Kombination vorzugsweise so abgestimmt ist, dass sich die Partikel erst in dem überkritischen Drehzahlbereich in dem Fluid bewegen können,
b5) als Wachs, und/oder
c) **dass** das Fluid der Ausgleichsmasse (9) eine Viskosität aufweist, die abhängig ist von mindestens einer der folgender Einflussgrößen:
c1) Temperatur des Fluids,
c2) Magnetfeld, das auf das Fluid einwirkt,
c3) elektrisches Feld, das auf das Fluid einwirkt, oder
c4) mechanische Belastung des Fluids, insbesondere durch Schwergeschwindigkeit des Fluids, und/oder
d) **dass** das Fluid der Ausgleichsmasse (9) nicht-newtonsches Fluid ist, beispielsweise
d1) ein Casson-Fluid,
d2) ein Bingham-Fluid oder
d3) ein Boger-Fluid, und/oder
e) **dass** die Ausgleichsmasse (9) hinreichend schwer ist, um bei der räumlichen Lage der Ausgleichsmasse (9) innerhalb des Glockentellers (1) das selbsttätige passive Auswuchten des Glockentellers (1) zu ermöglichen.

5. Glockenteller (1) nach einem der vorhergehenden Ansprüche, **gekennzeichnet durch**
a) einen konstruktiv vorgegebenen Betriebsdrehzahlbereich, wobei der Glockenteller (1) bei der Applikation des Beschichtungsmittels im Beschichtungsbetrieb mit einer Betriebsdrehzahl (n_{LACKIER}) innerhalb des Betriebsdrehzahlbereichs rotiert,
b) eine konstruktiv bedingte kritische Drehzahl (n_{KRIT}), bei welcher das Lagersystem des Glockentellers (1) in Resonanz gerät,
c) einen konstruktiv bedingten unterkritischen Drehzahlbereich mit Drehzahlen unterhalb der kritischen Drehzahl (n_{KRIT}) des Lagersystems, und
d) dem konstruktiv bedingten überkritischen Drehzahlbereich mit Drehzahlen oberhalb der kritischen Drehzahl (n_{KRIT}) des Lagersystems,
e) wobei die kritische Drehzahl (n_{KRIT})
e1) unterhalb des Betriebsdrehzahlbereichs liegt, so dass der Beschichtungsbetrieb im überkritischen Drehzahlbereich erfolgt und die Ausgleichsmasse (9) dabei zu dem selbsttätigen passiven Auswuchten des Glockentellers (1) führt, oder
e2) oberhalb des Betriebsdrehzahlbereichs liegt, so dass im Beschichtungsbetrieb kein selbsttätiges Auswuchten des Glockentellers (1) erfolgt.

6. Glockenteller (1) nach einem der vorhergehenden Ansprüche,
**dadurch gekennzeichnet,**
a) **dass** ein Fixierungsmechanismus (11) vorgesehen ist zur teilweisen oder vollständigen Fixierung der Ausgleichsmasse (9) in dem Glockenteller (1), insbesondere beim Durchfahren des unterkritischen Drehzahlbereichs oder nach dem selbsttätigen passiven Auswuchten,
b) **dass** der Fixierungsmechanismus (11) optional
b1) in den Glockenteller (1) integriert ist oder
b2) in den Rotationszerstäuber (2) integriert, aber getrennt von dem Glockenteller (1) ist, oder
b3) getrennt von dem Glockenteller (1) und getrennt von dem Rotationszerstäuber (2) angeordnet ist, und/oder
c) **dass** der Fixierungsmechanismus die Ausgleichsmasse (9) oberhalb der kritischen Drehzahl (n_{KRIT}) freigibt, so dass sich die Ausgleichsmasse (9) dann in dem Glockenteller (1) bewegen kann, um das selbsttätige passive Auswuchten des Glockentellers (1) zu ermöglichen, und/oder
d) **dass** der Fixierungsmechanismus die Ausgleichsmasse (9) unterhalb der kritischen Drehzahl (n_{KRIT}) und/oder beim Abbremsen aus dem überkritischen Drehzahlbereich in den unterkritischen Drehzahlbereich fixiert, so dass sich die Ausgleichsmasse (9) dann in dem Glockenteller (1) nicht oder nur vermindert bewegen kann, um eine Erhöhung von unwuchtinduzierten Schwingungen durch die Ausgleichsmasse (9) zu verhindern, und/oder
e) **dass** der Fixierungsmechanismus die Ausgleichsmasse (9) in Abhängigkeit von der Fliehkraft fixiert oder freigibt, insbesondere mittels eines Feder-Masse-Systems, und/oder
f) **dass** der Fixierungsmechanismus zur Fixierung der Ausgleichsmasse (9) einen Magneten aufweist, insbesondere einen Elektromagneten aufweist, und/oder
g) **dass** der Fixierungsmechanismus mit Druckluft betrieben wird, und/oder
h) **dass** der Fixierungsmechanismus elektrisch betrieben wird, und/oder
i) **dass** der Fixierungsmechanismus hydraulisch betrieben wird.

7. Glockenteller (1) nach einem der Ansprüche 4 bis 6, **dadurch gekennzeichnet,**
a) **dass** das Fluid der Ausgleichsmasse (9) magnet-rheologisch ist und ein Elektromagnet ein magnetisches Feld erzeugt, das auf das Fluid wirkt und die Viskosität des Fluids beeinflusst, um das Fluid oder darin enthaltene Partikel mehr oder weniger zu fixieren oder freizugeben, oder
b) **dass** das Fluid der Ausgleichsmasse (9) elektro-rheologisch ist und ein Felderzeuger ein elektrisches Feld erzeugt, das auf das Fluid wirkt und die Viskosität des Fluids beeinflusst, um das Fluid oder darin enthaltene Partikel mehr oder weniger zu fixieren oder freizugeben.

8. Rotationszerstäuber (2) mit einem Glockenteller (1) nach einem der vorhergehenden Ansprüche.

9. Beschichtungsroboter (10), insbesondere Lackierroboter (10), mit einem Rotationszerstäuber (2) nach Anspruch 8, wobei der Rotationszerstäuber (2) von dem Beschichtungsroboter (10) beweglich geführt wird.

10. Beschichtungsanlage zur Beschichtung von Bauteilen, insbesondere von Kraftfahrzeugkarosseriebauteilen, mit einem Beschichtungsmittel, insbesondere mit einem Lack, mit
a) einem Beschichtungsroboter (10) nach Anspruch 9,
b) einem Rotationszerstäuber (2) nach Anspruch 8, oder
c) einem Glockenteller (1) nach einem der Ansprüche 1 bis 7.

11. Betriebsverfahren für einen Glockenteller (1) nach einem der Ansprüche 1 bis 7 oder für einen Rotationszerstäuber (2) gemäß Anspruch 8, **gekennzeichnet durch** folgenden Schritt:
Drehen des Glockentellers (1) mit einer Drehzahl in einem überkritischen Drehzahlbereich oberhalb der kritischen Drehzahl (n_{KRIT}) eines Lagersystems, in welcher das Lagersystem in Resonanz gerät, so dass die Ausgleichsmasse (9) zu dem selbsttätigen passiven Auswuchten des Glockentellers (1) führt,
wobei das selbsttätige passive Auswuchten des Glockentellers (1) erfolgt, während der Glockenteller (1) an dem Rotationszerstäuber montiert ist, oder während der Glockenteller (1) von dem Rotationszerstäuber demontiert ist, beispielsweise auf einer Auswuchtmaschine.

12. Betriebsverfahren nach einem Anspruch 11, **dadurch gekennzeichnet,**
a) **dass** der Glockenteller (1) im Beschichtungsbetrieb bei der Beschichtung der Bauteile mit einer Betriebsdrehzahl (n_{LACKIER}) unterhalb der kritischen Drehzahl (n_{KRIT}) betrieben wird, und
b) **dass** der Glockenteller (1) zum selbsttätigen passiven Auswuchten mit einer höheren Drehzahl betrieben wird, die im überkritischen Drehzahlbereich oberhalb der kritischen Drehzahl (n_{KRIT}) legt.

13. Betriebsverfahren nach einem der Ansprüche 11 bis 12,
**dadurch gekennzeichnet,**
a) **dass** der Glockenteller (1) aus dem unterkritischen Drehzahlbereich in den überkritischen Drehzahlbereich beschleunigt wird,
b) **dass** die Ausgleichsmasse (9) bis zum Erreichen des überkritischen Drehzahlbereichs in dem Glockenteller (1) fixiert wird,
c) **dass** die Ausgleichsmasse (9) nach dem Erreichen des überkritischen Drehzahlbereichs in dem Glockenteller (1) freigegeben wird,
d) **dass** der Glockenteller (1) in dem überkritischen Drehzahlbereich selbsttätig passiv ausgewuchtet wird, wobei die Ausgleichsmasse (9) freigegeben ist,
e) **dass** die Ausgleichsmasse (9) nach dem selbsttätigen passiven Auswuchten wieder in dem Glockenteller (1) fixiert wird,
f) **dass** der Glockenteller (1) nach dem selbsttätigen passiven Auswuchten in dem überkritischen Drehzahlbereich wieder in den unterkritischen Drehzahlbereich abgebremst wird, und/oder
g) **dass** der Glockenteller (1) nach dem selbsttätigen passiven Auswuchten dann in dem unterkritischen Drehzahlbereich das Beschichtungsmittel appliziert.

14. Betriebsverfahren nach einem der Ansprüche 11 bis 13,
**gekennzeichnet durch** folgenden Schritt:
Fixieren der Ausgleichsmasse (9) in dem Glockenteller (1), insbesondere beim Beschleunigen aus dem unterkritischen Drehzahlbereich hinein in den überkritischen Drehzahlbereich oder nach dem selbsttätigen passiven Auswuchten des Glockentellers (1) beim Abbremsen aus dem überkritischen Drehzahlbereich in den unterkritischen Drehzahlbereich, insbesondere **durch**
a) eine UV-Bestrahlung der UV-härtbaren Ausgleichsmasse (9),
b) eine Erwärmung der Ausgleichsmasse (9),
c) eine Beaufschlagung der Ausgleichsmasse (9) mit einem Magnetfeld,
d) eine Beaufschlagung der Ausgleichsmasse (9) mit einem elektrischen Feld.

15. Betriebsverfahren nach einem der Ansprüche 11 bis 14, **dadurch gekennzeichnet, dass** der Glockenteller (1) zum selbsttätigen passiven Auswuchten regelmäßig in den überkritischen Drehzahlbereich gefahren wird, insbesondere nach einer Bedarfsmeldung einer Überwachungseinrichtung, insbesondere jeweils nach Ablauf
a) einer vorgegebenen Zeitdauer, insbesondere einmal täglich,
b) einer vorgegebenen Beschichtungsdauer und/oder
c) einer vorgegebenen Anzahl von Umdrehungen des Glockentellers (1).

## Claims

1. Bell cup (1) as a spray-off body for a rotary atomizer (2) for applying a coating agent to a component, in particular for applying a paint to a motor vehicle body component, **characterized by** at least one balancing mass (9) for the automatic passive balancing of the bell cup body (1), wherein the balancing mass (9) is not arranged in a separate ring body, but is movably arranged in the bell cup (1) in order to enable the automatic passive balancing of the bell cup (1) in a supercritical speed range.

2. Bell cup (1) according to claim 1, **characterized by** at least one annularly circumferential receiving chamber (8) in the bell cup (1) for receiving the balancing mass (9), in particular as an annular groove or as an annularly circumferential cavity.

3. Bell cup (1) according to claim 2, **characterized in,**
a) **that** the bell cup (1) has a plurality of receiving chambers (8) for the balancing mass (9),
b) **that** the receiving chambers (8) are optionally separated from one another or connected to one another,
c) **that** the receiving chambers (8) are optionally axially offset from one another,
d) **that** the receiving chambers (8) are optionally radially offset from one another.

4. Bell cup (1) according to one of the preceding claims, **characterized in**
a) **that** the balancing mass (9) can move in the bell cup (1) along a predetermined path, in particular
a1) in circumferential direction
a2) radially and/or
a3) axially, and/or
b) **that** the balancing mass (9) is designed as follows:
b1) as a fluid, in particular
b11) as a liquid, optionally as water or oil, or
b12) as a resin, in particular as a UV-curable resin for fixing the resin in the bell cup (1) by UV irradiation,
b2) as a powder,
b3) as granules consisting of numerous solid particles, in particular spheres, or
b4) as a mixture of solid particles in a fluid, in particular in the form of spheres in an oil, the combination preferably being adjusted in such a way that the particles can only move in the fluid in the supercritical speed range,
b5) as a wax, and/or
c) **that** the fluid of the balancing mass (9) has a viscosity which is dependent on at least one of the following influencing variables:
c1) temperature of the fluid,
c2) magnetic field acting on the fluid,
c3) electric field acting on the fluid, or
c4) mechanical load on the fluid, in particular due to heavy velocity of the fluid, and/or
d) **that** the fluid of the balancing mass (9) is a non-Newtonian fluid, e.g.
d1) a Casson fluid,
d2) a Bingham fluid, or
d3) a Boger fluid, and/or
e) **that** the balancing mass (9) is sufficiently heavy to enable the automatic passive balancing of the bell cup (1) given the spatial position of the balancing mass (9) within the bell cup (1).

5. Bell cup (1) according to one of the preceding claims, **characterized by**
a) a structurally predetermined operating speed range, wherein the bell cup (1) rotates at an operating speed (n_{PAINT}) within the operating speed range during application of the coating agent in coating operation,
b) a design-related critical speed (n_{CRIT}) at which the bearing system of the bell cup (1) starts to resonate,
c) a design-related subcritical speed range with speeds below the critical speed (n_{CRIT}) of the bearing system, and
d) the design-related supercritical speed range with speeds above the critical speed (N_{CRIT}) of the bearing system,
e) where the critical speed (n_{CRIT})
e1) is below the operating speed range, so that the coating operation takes place in the supercritical speed range and the balancing mass (9) thereby leads to the automatic passive balancing of the bell cup (1), or
e2) is above the operating speed range, so that no automatic balancing of the bell cup (1) takes place in coating operation.

6. Bell cup (1) according to one of the preceding claims, **characterized in**
a) **that** a fixing mechanism (11) is provided for partial or complete fixing of the balancing mass (9) in the bell cup (1), in particular when passing through the subcritical speed range or after the automatic passive balancing,
b) **that** the fixing mechanism (11) optionally
b1) is integrated into the bell cup (1) or
b2) is integrated into the rotary atomizer (2) but separate from the bell cup (1), or
b3) is arranged separately from the bell cup (1) and separately from the rotary atomizer (2), and/or
c) **that** the fixing mechanism releases the balancing mass (9) above the critical number of rotation (n_{CRIT}) so that the balancing mass (9) can then move in the bell cup (1) to enable the automatic passive balancing of the bell cup (1), and/or
d) **that** the fixing mechanism fixes the balancing mass (9) below the critical rotational speed (N_{CRIT}) and/or when braking from the supercritical rotational speed range into the noncritical rotational speed range, so that the balancing mass (9) cannot then move in the bell cup (1) or can only move to a reduced extent in order to prevent an increase in unbalance-induced vibrations by the balancing mass (9), and/or
e) **that** the fixing mechanism fixes or releases the balancing mass (9) as a function of the centrifugal force, in particular by means of a spring-mass system, and/or
f) **that** the fixing mechanism for fixing the balancing mass (9) comprises a magnet, in particular an electromagnet, and/or
g) **that** the fixing mechanism is operated by compressed air, and/or
h) **that** the fixing mechanism is operated electrically, and/or
i) **that** the fixing mechanism is operated hydraulically.

7. Bell cup (1) according to any one of claims 4 to 6, **characterized in,**
a) **that** the fluid of the balancing mass (9) is magnet-rheological and an electromagnet generates a magnetic field which acts on the fluid and influences the viscosity of the fluid to more or less fix or release the fluid or particles contained therein, or
b) **that** the fluid of the balancing mass (9) is electro-rheological and a field generator generates an electric field which acts on the fluid and influences the viscosity of the fluid to fix or release the fluid or particles contained therein to a greater or lesser extent.

8. Rotary atomizer (2) comprising a bell cup (1) according to any one of the preceding claims.

9. Coating robot (10), in particular painting robot (10), with a rotary atomizer (2) according to claim 8, wherein the rotary atomizer (2) is movably guided by the coating robot (10).

10. Coating installation for coating components, in particular motor vehicle body components, with a coating agent, in particular with a paint, having
a) a coating robot (10) according to claim 9,
b) a rotary atomizer (2) according to claim 8, or
c) a bell cup (1) according to any one of claims 1 to 7.

11. Operating method for a bell cup (1) according to one of claims 1 to 7 or for a rotary atomizer (2) according to claim 8, **characterized by** the following step:
Rotating the bell cup (1) at a speed in a supercritical speed range above the critical speed (n_{CRIT}) of a bearing system, in which the bearing system comes into resonance, so that the balancing mass (9) leads to the automatic passive balancing of the bell cup (1),
wherein the automatic passive balancing of the bell cup (1) takes place while the bell cup (1) is mounted on the rotary atomizer, or the automatic passive balancing of the bell cup (1) takes place while the bell cup (1) is dismounted from the rotary atomizer, for example on a balancing machine.

12. Operating method according to claim 11, **characterized in,**
a) **that** the bell cup (1) is operated in coating mode during the coating of the components at an operating speed (n_{PAINT}) below the critical speed (n_{CRIT}), and
b) **that**, for automatic passive balancing, the bell cup (1) is operated at a higher speed which is in the supercritical speed range above the critical speed (n_{CRIT}).

13. Operating method according to any one of claims 11 to 12, **characterized in**
a) **that** the bell cup (1) is accelerated from the subcritical speed range into the supercritical speed range,
b) **that** the balancing mass (9) is fixed in the bell cup (1) until the supercritical speed range is reached,
c) **that** the balancing mass (9) is released after reaching the supercritical speed range in the bell cup (1),
d) **that** the bell cup (1) is automatically passively balanced in the supercritical speed range, the balancing mass (9) being released,
e) **that** the balancing mass (9) is fixed again in the bell cup (1) after the automatic passive balancing,
f) **that** the bell cup (1) is braked back into the subcritical speed range after the automatic passive balancing in the supercritical speed range, and/or
g) **that** the bell cup (1), after the automatic passive balancing, then applies the coating agent in the subcritical speed range.

14. Operating method according to any one of claims 11 to 13,
**characterized by** the following step:
Fixing the balancing mass (9) in the bell cup (1), in particular during acceleration from the subcritical speed range into the supercritical speed range or after the automatic passive balancing of the bell cup (1) during deceleration from the supercritical speed range into the subcritical speed range, in particular by means of
a) UV irradiation of the UV-curable balancing mass (9),
b) heating of the balancing mass (9),
c) application of a magnetic field to the balancing mass (9),
d) application of an electric field to the balancing mass (9).

15. Operating method according to one of claims 11 to 14, **characterized in that** the bell cup (1) for automatic passive balancing is regularly moved into the supercritical speed range, in particular after a demand signal from a monitoring device, in particular in each case after expiry of
a) a predetermined period of time, in particular once a day,
b) a predetermined coating time, and/or
c) a predetermined number of revolutions of the bell cup (1).

## Revendications

1. Bol (1) en tant que corps de pulvérisation pour un pulvérisateur rotatif (2) pour l'application d'un produit de revêtement sur un composant, plus particulièrement pour l'application d'une peinture sur un composant de carrosserie de véhicule automobile, **caractérisé par** au moins une masse d'équilibrage (9) pour l'équilibrage passif automatique du bol (1), dans lequel la masse d'équilibrage (9) n'est pas disposée dans un corps annulaire séparé mais dans de manière mobile dans le bol (1), afin de permettre l'équilibrage passif automatique du bol (1) dans une plage de vitesses de rotation surcritique.

2. Bol (1) selon la revendication 1, **caractérisé par** au moins un espace de logement périphérique annulaire (8) dans le bol (1) pour le logement de la masse d'équilibrage (9), plus particulièrement sous la forme d'une rainure annulaire ou d'une cavité périphérique annulaire.

3. Bol (1) selon la revendication 2, **caractérisé en ce que**
a) le bol (1) comprend plusieurs espaces de logement (8) pour les masses d'équilibrage (9),
b) les espaces de logement (8) sont, en option, séparés les uns des autres ou reliés entre eux,
c) les espaces de logement (8) sont, en option, décalés axialement entre eux,
d) les espaces de logement (8) sont, en option, décalés radialement entre eux.

4. Bol (1) selon l'une des revendications précédentes,
**caractérisé en ce que**
a) la masse d'équilibrage (9) peut se déplacer dans le bol (1) le long d'une trajectoire prédéterminée, plus particulièrement
a1) dans la direction de la circonférence,
a2) radialement et/ou
a3) axialement et/ou
b) la masse d'équilibrage (9) est conçue comme suit :
b1) comme un fluide, plus particulièrement
b11) comme un liquide, en option comme de l'eau ou de l'huile ou
b12) comme une résine, plus particulièrement comme une résine durcissable aux UV pour la fixation de la résine dans le bol (1) par une irradiation par des UV,
b2) comme une poudre,
b3) comme un granulé constitué de nombreuses particules solides, plus particulièrement des billes ou
b4) comme un mélange de particules solides dans un fluide, plus particulièrement sous la forme de billes dans une huile, dans lequel la combinaison est de préférence adaptée de sorte que les particules ne peuvent se déplacer dans le fluide que dans la plage de vitesses de rotation surcritique,
b5) comme une cire et/ou
c) le fluide de la masse d'équilibrage (9) présente une viscosité qui dépend d'au moins une des grandeurs d'influence suivantes :
c1) température du fluide,
c2) champ magnétique qui agit sur le fluide,
c3) champ électrique qui agit sur le fluide ou
c4) charge mécanique du fluide, plus particulièrement du fait de la vitesse de cisaillement du fluide et/ou
d) le fluide de la masse d'équilibrage (9) est un fluide non newtonien, par exemple
d1) un fluide de Casson,
d2) un fluide de Bingham ou
d3) un fluide de Boger et/ou
e) la masse d'équilibrage (9) est suffisamment lourde pour permettre, lors de la position spatiale de la masse d'équilibrage (9) à l'intérieur du bol (1), l'équilibrage passif automatique du bol (1).

5. Bol (1) selon l'une des revendications précédentes, **caractérisé par**
a) une plage de vitesses de rotation de service prédéterminé par la construction, dans lequel le bol (1), lors de l'application du produit de revêtement en mode de revêtement, tourne avec une vitesse de rotation de service (n_{LACKIER}) à l'intérieur de la plage de vitesses de rotation de service,
b) une vitesse de rotation critique (n_{KRIT}), prédéterminée par la construction, à laquelle le système de palier du bol (1) entre en résonance,
c) une plage de vitesses de rotation sous-critique prédéterminée par la construction, avec des vitesses de rotation en dessous de la vitesse de rotation critique (n_{KRIT}) du système de palier et
d) une plage de vitesses de rotation sur-critique prédéterminée par la construction, avec des vitesses de rotation au-dessus de la vitesse de rotation critique (n_{KRIT}) du système de palier,
e) dans lequel la vitesse de rotation critique (n_{KRIT})
e1) se trouve en dessous de la plage de vitesses de rotation de service, de sorte que le mode de revêtement a lieu dans la plage de vitesses de rotation sur-critique et la masse d'équilibrage (9) permet l'équilibrage passif automatique du bol (1) ou
e2) se trouve au-dessus de la plage de vitesses de rotation de service, de sorte que, dans le mode de revêtement, aucun équilibrage automatique du bol (1) n'a lieu.

6. Bol (1) selon l'une des revendications précédentes, **caractérisé en ce que**
a) un mécanisme de fixation (11) est prévu pour la fixation partielle ou complète de la masse d'équilibrage (9) dans le bol (1), plus particulièrement lors du passage de la plage de vitesses de rotation sous-critique ou après l'équilibrage passif automatique,
b) le mécanisme de fixation (11) est, en option,
b1) intégré dans le bol (1) ou
b2) intégré dans le pulvérisateur rotatif (2), mais séparément du bol (1) ou
b3) disposé séparément du bol (1) et séparément du pulvérisateur rotatif (2) et/ou
c) le mécanisme de fixation libère la masse d'équilibrage (9) au-dessus de la vitesse de rotation critique (n_{KRIT}) de sorte que la masse d'équilibrage (9) peut se déplacer dans le bol (1) afin de permettre l'équilibrage passif automatique du bol (1) et/ou
d) le mécanisme de fixation fixe la masse d'équilibrage (9) en dessous de la vitesse de rotation critique (n_{KRIT}) et/ou lors d'un freinage de la plage de vitesses de rotation sur-critique vers la plage de vitesses de rotation sous-critique, de sorte que la masse d'équilibrage (9) ne peut plus ou se déplacer, ou seulement légèrement, dans le bol (1), afin d'empêcher une augmentation des vibrations induites par le déséquilibre, dues à la masse d'équilibrage (9) et/ou
e) le mécanisme de fixation fixe ou libère la masse d'équilibrage (9) en fonction de la force centrifuge, plus particulièrement au moyen d'un système ressort-masse et/ou
f) le mécanisme de fixation comprend, pour la fixation de la masse d'équilibrage (9), un aimant, plus particulièrement un électro-aimant et/ou
g) le mécanisme de fixation fonctionne avec de l'air comprimé et/ou
h) le mécanisme de fixation fonctionne électriquement et/ou
i) le mécanisme de fixation fonctionne hydrauliquement.

7. Bol (1) selon l'une des revendications 4 à 6 **caractérisé en ce que**
a) le fluide de la masse d'équilibrage (9) est magnéto-rhéologique et un électro-aimant génère un champ magnétique qui agit sur le fluide et qui influence la viscosité du fluide afin de fixer ou de libérer le fluide ou les particules qui y sont contenues ou
b) le fluide de la masse d'équilibrage (9) est électro-rhéologique et un générateur de champ génère un champ électrique qui agit sur le fluide et qui influence la viscosité du fluide afin de fixer ou de libérer le fluide ou les particules qui y sont contenues.

8. Pulvérisateur rotatif (2) avec un bol (1) selon l'une des revendications précédentes.

9. Robot de revêtement (10), plus particulièrement robot de peinture (10), avec un pulvérisateur rotatif (2) selon la revendication 8, dans lequel le pulvérisateur rotatif (2) est guidé de manière mobile par le robot de revêtement (10).

10. Installation de revêtement pour le revêtement de composants, plus particulièrement de composants de carrosseries de véhicules, avec un produit de revêtement, plus particulièrement avec une peinture, avec
a) un robot de revêtement (10) selon la revendication 9,
b) un pulvérisateur rotatif (2) selon la revendication 8 ou
c) un bol (1) selon l'une des revendications 1 à 7.

11. Procédé de fonctionnement pour un bol (1) selon l'une des revendications 1 à 7 ou pour un pulvérisateur rotatif (2) selon la revendication 8, **caractérisé par** l'étape suivante :
rotation du bol (1) avec une vitesse de rotation dans une plage de vitesses de rotation sur-critique supérieure à la vitesse de rotation critique (n_{KRIT}) d'un système de palier, dans lequel le système de palier entre en résonance de sorte que la masse d'équilibrage (9) provoque l'équilibrage passif automatique du bol (1),
dans lequel l'équilibrage passif automatique du bol (1) a lieu pendant que le bol (1) est monté sur le pulvérisateur rotatif ou pendant que le bol (1) est démonté du pulvérisateur rotatif, par exemple sur une machine d'équilibrage.

12. Procédé de fonctionnement selon la revendication 11, **caractérisé en ce que**
a) le bol (1) fonctionne, en mode revêtement, lors du revêtement des composants, avec une vitesse de rotation de service (n_{LACKIER}) inférieure à la vitesse de rotation critique (n_{KRIT}) et
b) le bol (1) fonctionne, pour l'équilibrage passif automatique, avec une vitesse de rotation plus grande, qui se trouve dans la plage de vitesses de rotation sur-critique, au-dessus de la vitesse de rotation critique (n_{KRIT}).

13. Procédé de fonctionnement selon l'une des revendications 11 à 12
**caractérisé en ce que**
a) le bol (1) est accéléré de la plage de vitesses de rotation sous-critique à la plage de vitesses de rotation sur-critique,
b) la masse d'équilibrage (9) est fixée dans le bol (1) jusqu'à ce que la plage de vitesses de rotation sur-critique soit atteinte,
c) la masse d'équilibrage (9) est libérée une fois la plage de vitesses de rotation sur-critique atteinte dans le bol (1),
d) le bol (1) est équilibré de manière passive et automatique dans la plage de vitesses de rotation sur-critique, dans lequel la masse d'équilibrage (9) est libérée,
e) la masse d'équilibrage (9) est à nouveau fixée, après l'équilibrage passif automatique, dans le bol (1),
f) le bol (1) est à nouveau freiné, après l'équilibrage passif automatique dans la plage de vitesses de rotation sur-critique, dans la plage de vitesses de rotation sous-critique et/ou
g) le bol (1) applique alors le produit de revêtement après l'équilibrage passif automatique dans la plage de vitesses de rotation sous-critique.

14. Procédé de fonctionnement selon l'une des revendications 11 à 13
**caractérisé par** l'étape suivante :
fixation de la masse d'équilibrage (9) dans le bol (1), plus particulièrement lors d'une accélération de la plage de vitesses de rotation sous-critique vers la plage de vitesses de rotation sur-critique ou après l'équilibrage passif automatique du bol (1) lors d'un freinage de la plage de vitesses de rotation sur-critique vers la plage de vitesses de rotation sous-critique, plus particulièrement par
a) une irradiation aux UV de la masse d'équilibrage (9) durcissable aux UV,
b) un chauffage de la masse d'équilibrage (9),
c) une sollicitation de la masse d'équilibrage (9) avec un champ magnétique,
d) une sollicitation de la masse d'équilibrage (9) avec un champ électrique.

15. Procédé de fonctionnement selon l'une des revendications 11 à 14, **caractérisé en ce que** le bol (1) tourne régulièrement, pour l'équilibrage passif automatique, dans la plage de vitesses de rotation sur-critique, plus particulièrement après une requête d'un dispositif de surveillance, plus particulièrement respectivement avec l'écoulement
a) d'une durée prédéterminée, plus particulièrement une fois par jour,
b) d'une durée de revêtement prédéterminée et/ou
c) d'un nombre prédéterminé de tours du bol (1).
